# EUROPÄISCHE PATENTSCHRIFT

(11) **EP 0 565 142 B1**
(45) Veröffentlichungstag und Bekanntmachung des Hinweises auf die Patenterteilung: **28.02.1996**
(21) Anmeldenummer: 93111141.3
(22) Anmeldetag: 18.03.1991
(51) Int. Cl.: F01N 3/28, F01N 3/20, F01N 7/00

(54) **Katalysator mit mindestens einem Temperaturfühler**
Catalyst with at least one temperature sensor
Catalyseur comprenant au moins un capteur de température

(30) Priorität: 19.03.1990 DE 4008779
(43) Veröffentlichungstag der Anmeldung: 13.10.1993
(62) Teilanmeldung aus: 91906416.2
(73) Patentinhaber: Emitec Gesellschaft für Emissionstechnologie mbH, D-53797 Lohmar (DE)
(72) Erfinder: Maus, Wolfgang, D-51429 Bergisch Gladbach (DE); Brück, Rolf, D-51429 Bergisch Gladbach (DE); Swars, Helmut, D-51429 Bergisch Gladbach (DE)
(74) Vertreter: Kahlhöfer, Hermann Bardehle-Pagenberg-Dost-Altenburg-Frohwitter-Geissler & Partner Patent- und Rechtsanwälte

(56) Entgegenhaltungen:
- WO-A-89/10471
- DE-A- 2 406 073
- DE-A- 2 643 739
- PATENT ABSTRACTS OF JAPAN vol. 014, no. 174 (M-0959) 5. April 1990 & JP-A-20 27 109 (NISSAN) 29. Januar 1990
- PATENT ABSTRACTS OF JAPAN vol. 004, no. 163 (P-036) 13. November 1980 & JP-A-55 110 941 (SHOWA) 27. August 1980

## Beschreibung

Die vorliegende Erfindung betrifft einen Katalysator mit mindestens einem Temperaturfühler.

Entsprechend den in vielen Ländern immer strenger werdenden Umweltschutzvorschriften werden inzwischen viele Verbrennungsmaschinen, insbesondere bei Kraftfahrzeugen, mit einem Katalysator ausgestattet. Ein solcher Katalysator wird vom Abgas durchströmt und setzt in seinem katalytisch aktiven Volumen, welches eine große Oberfläche aufweist, die mit dem Abgas in Kontakt tritt, Schadstoffe im Abgas katalytisch zu unschädlichen Stoffen um. Als Trägerkörper für katalytisch aktives Material sind viele verschiedene Ausführungen bekannt, teilweise aus Keramik und teilweise aus Metall. Es handelt sich im allgemeinen um wabenähnliche Körper, welche eine Vielzahl von Kanälen aufweisen, die vom Abgas durchströmt werden. Metallische Katalysatoren werden im allgemeinen aus strukturierten Blechen geschichtet, spiralig aufgewickelt oder anderweitig verschlungen. Solche Formen sind beispielsweise in der EP-B-0 223 058, der EP-B-0 245 737 oder der EP-B-0 245 738 beschrieben.

Um zur weiteren Reduzierung von Schadstoffen eine katalytische Umsetzung unmittelbar nach dem Start des Motors zu gewährleisten, wurden auch bereits elektrisch beheizbare Katalysatoren vorgeschlagen, die schneller die für eine katalytische Umsetzung notwendige Temperatur erreichen.

Solche heizbaren Katalysatoren sind beispielsweise in der WO 89/10470 beschrieben.

Durch die WO-89/10471 ist ein beheizbarer Katalysatorkörper mit lagenweise angeordneten, gewickelten strukturierten Blechen bekannt, bei dem in seiner vordersten in einem Querschnittbereich nahe seiner Stirnflächen ein Heizelement integriert ist, welches durch die Blechlagen gebildet wird. Diese Blechlagen sind zusätzlich oder alternativ Temperaturfühler, die eine Temperaturmessung über den Widerstand durchführen. Da die Blechlagen sich über die jeweiligen Katalysatorscheibe erstrecken, mißt der Temperaturfühler die Temperatur der Katalysatorscheibe über seinen gesamten Querschnittsbereich. Wegen des insgesamt geringen Widerstandes eines solchen beheizbaren Wabenkörpers ist die Meßgenauigkeit, insbesondere bei transienten Vorgängen, nicht besonders hoch. Die Überwachung eines Katalysators allein mit einer solchen Widerstandsmessung über den ganzen Körper ist nur begrenzt aussagekräftig.

Als zusätzliche Ergänzung der bekannten Systeme ist es als wünschenswert erkannt worden, die Funktionsfähigkeit einer katalytischen Abgasreinigung während des Betriebes ständig überwachen zu können, um Fehlfunktionen frühzeitig erkennen und beseitigen zu können. Dies wurde z. B. mit Hilfe von zwei Temperaturmeßstellen versucht, wobei die Temperaturdifferenz beobachtet wurde. Solche Anordnungen sind in der WO 88/07622 A1, der DE 35 16 981 A1, der DE-AS 23 46 425 oder der DE 26 43 739 C2 beschrieben.

Aufgabe der Erfindung ist es, mit einem möglichst geringen Aufwand und geringer Störanfälligkeit ein Meßsystem für eine möglichst genaue Überwachung der Funktion des Katalysators im Betrieb zu ertüchtigen, wobei die Temperatur nicht punktuell sondern über einen repräsentativen Teil mindestens eines Querschnittsbereiches integral gemessen wird.

Der Erfindung liegt der Gedanke zugrunde, daß die Umsetzung von Schadstoffen im Katalysator eine exotherme Reaktion ist, bei der also Energie frei wird. Dieser Effekt soll bei der vorliegenden Erfindung zur Überwachung der Funktionsfähigkeit des Katalysators und nach Möglichkeit noch zur Ermittlung anderer Informationen herangezogen werden. Hierzu wird die Temperatur nicht punktuell, sondern über einen etwa repräsentativen Teil des Querschnittsbereiches integral gemessen. Hierdurch wird die Genauigkeit der Überwachung erhöht. Als repräsentativ wird dabei eine Messung angesehen, die sowohl aus den Randbereichen der Strömung wie auch aus den Zentralbereichen Informationen enthält. Ein Querschnittsbereich ist dabei eine etwa in einer Querschnittsebene liegende Scheibe aus dem Abgassystem, in welcher die Messung durchgeführt wird. Der Temperaturfühler verläuft parallel zu einer Blechlage des Katalysators, vorzugsweise ist dieser in die Blechlage eingelegt oder integriert.

Geeignet für integrale Messungen sind linienförmige Temperaturfühler, wie sie im Stand der Technik zahlreich bekannt sind. Insbesondere kommen Meßfühler mit einem temperaturabhängigen Widerstand, vorzugsweise in Form eines Drahtes, in Betracht. Temperaturmessungen gehören im übrigen zu den genauesten und am besten beherrschten Messungen in der Technik und eignen sich daher für die vorliegende Anwendung. Sie reagieren auch auf relativ kleine und schnelle Änderungen.

Vorzugsweise wird mindestens eine Temperaturmeßstelle innerhalb des Katalysators selbst angeordnet. Insbesondere bei beheizbaren Katalysatoren sind an diesem ohnehin schon elektrische Durchführungen und Anschlüsse vorhanden, so daß diese zusätzliche Instrumentierung den Aufwand an Verkabelung des Abgassystems nicht übermäßig erhöht. Dabei kann davon ausgegangen werden, daß eine in den Katalysator integrierte Temperaturmeßstelle im vorderen Stirnbereich eine Temperatur proportional zu der Temperatur des anströmenden Abgases mißt, während eine Temperaturmeßstelle im Abströmbereich des Katalysators eine der Temperatur der abströmenden Abgase proportionale Temperatur mißt. Bei einer solchen Anordnung können unterschiedliche systemtechnische und theoretische Ansätze gemacht werden. Man kann einerseits die Temperaturfühler so anordnen, daß sie im wesentlichen vom Abgas umströmt werden und daher die Abgastemperatur messen, man kann jedoch auch die Temperaturmeßstellen so anordnen, daß sie im wesentlichen in einem guten Wärmekontakt mit dem Katalysatormaterial oder dem Trägermaterial des Katalysators stehen. Für beide Möglichkeiten gibt es gute Gründe, die unter Berücksichtigung der hauptsächlichen Betriebstemperaturen und der Geometrie der Katalysatoranordnungen bei der Auswahl des Meßsystems berücksichtigt werden müssen. Günstig kann es beispielsweise sein, im vorderen Bereich des Katalysators die Gastemperatur zu messen und im hinteren Bereich die Temperatur des Trägermaterials. Die bei der katalytischen Umsetzung freiwerdende Energie wird nach dem derzeitigen Verständnis der Wärmetransportvorgänge zunächst auf das Trägermaterial des Katalysators übertragen und von diesem wieder auf das abströmende Abgas.

Jedenfalls ist die im Katalysator erzeugte Energie so hoch, daß signifikante Temperaturunterschiede leicht zu messen sind.

Zur Lösung der gestellten Aufgabe dient ein speziell ausgebildeter Katalysator, der in mindestens einem Ouerschnittsbereich mindestens einen integrierten Temperaturfühler gemäß Anspruch 1 aufweist, der die Temperatur über einen etwa repräsentativen Teil des Querschnittsbereiches integral mißt. Er ist für Systeme geeignet, bei denen solche Temperaturmeßwerte benötigt werden. Insbesondere können auch beheizbare Katalysatoren so ausgestattet sein, auch wenn sie nicht mit einer Betriebsüberwachung versehen sind. Spezielle Ausführungsformen der integrierten Temperaturfühler werden ebenfalls im folgenden anhand der Zeichnung beschrieben.

Eine teilweise schematische Übersichtsdarstellung und Ausführungsbeispiele für Einzelheiten der vorliegenden Erfindung sind in der Zeichnung dargestellt. Es zeigen
- Fig. 1: eine schematische Übersicht über ein Beispiel für ein Motor-und Katalysatorüberwachungssystem,
- Fig. 2: ein Ausführungsbeispiel für einen Querschnitt durch einen erfindungsgemäß ausgestalteten Katalysator in der Ebene eines Temperaturfühlers,
- Fig. 3 und 4: den Aufbau eines geeigneten Temperaturfühlers im Längsschnitt (Fig. 3) und im Querschnitt (Fig. 4) und
- Fig. 5: ein schematisches Beispiel für die fertigungstechnische Einbindung eines Temperaturfühlers in einen Katalysatorkörper.

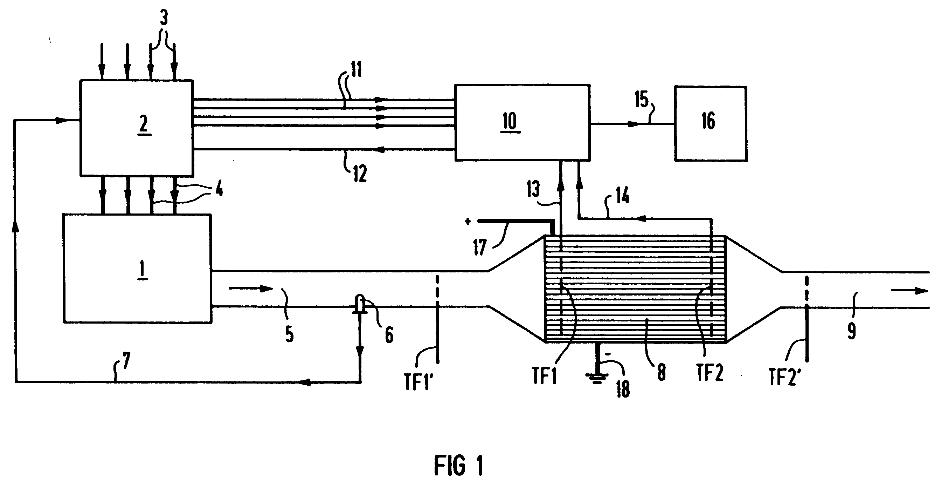

Fig. 1 zeigt schematisch einen Verbrennungsmotor 1 mit einer elektronischen Motorsteuerung 2, welche über Meßwertzuleitungen 3 Informationen von außen erhält und danach über Motorzuleitungen 4 den Motor 1 steuert. Aus dem Motor gelangen Abgase in Pfeilrichtung in eine Abgasleitung 5, in welcher eine Lambda-Sonde 6 angeordnet ist, welche wiederum über eine Meßwertleitung 7 mit der Motorsteuerung 2 in Verbindung steht. In der Abgasleitung ist ein Katalysator 8 angeordnet, an den sich eine Abgasauslaßleitung 9 anschließt. Der Katalysator 8 kann aus einer oder mehreren einzelnen Scheiben bestehen und natürlich kann das Abgassystem auch mehrsträngig aufgebaut sein, was jedoch für die vorliegende Erfindung beides keine entscheidende Rolle spielt. Der Katalysator 8 kann auch zumindest in Teilbereichen elektrisch beheizbar sein und dementsprechende elektrische Anschlüsse 17 und 18 aufweisen. Dabei sollen im Abgassystem mindestens zwei Temperaturfühler angeordnet sein, zwischen denen sich zumindest ein Teil des katalytisch aktiven Volumens befindet. Für den vorderen Temperaturfühler sind in Fig. 1 zwei Alternativen angegeben, nämlich der Temperaturfühler TF1 im vorderen Stirnbereich des Katalysators 8 und der Temperaturfühler TF1' in der Abgasleitung 5. Für den hinteren Temperaturfühler sind ebenfalls zwei Alternativen angegeben, nämlich ein im hinteren Stirnbereich des Katalysators 8 integrierter Temperaturfühler TF2 und ein in der Abgasauslaßleitung 9 angeordneter Temperaturfühler TF2'. Welche der jeweiligen Alternativen miteinander vorteilhaft kombiniert werden sollten, hängt von den geometrischen Gegebenheiten und anderen Faktoren ab. Wichtig ist vor allem, daß zwischen den Meßstellen ein wesentlicher Teil der katalytischen Reaktionen abläuft. Die Temperaturmeßwerte werden über die Meßleitungen 13 und 14 einer Überwachungselektronik 10 zugeführt. Diese wertet die Meßwerte aus, wobei ggf. Daten aus der Motorsteuerung 2 über Datenzuleitungen 11 bei der Auswertung hinzugezogen werden können. Auch eine Rückwirkung der Überwachungselektronik 10 auf die Motorsteuerung 2 über Datenableitungen 12 ist möglich. Das Ergebnis der Überwachung wird über eine Diagnoseleitung 15 an eine Anzeige 16 des Diagnoseergebnisses weitergegeben. Diese Anzeige kann z. B. in Form von Signallampen oder Anzeigeinstrumenten ausgebildet sein.

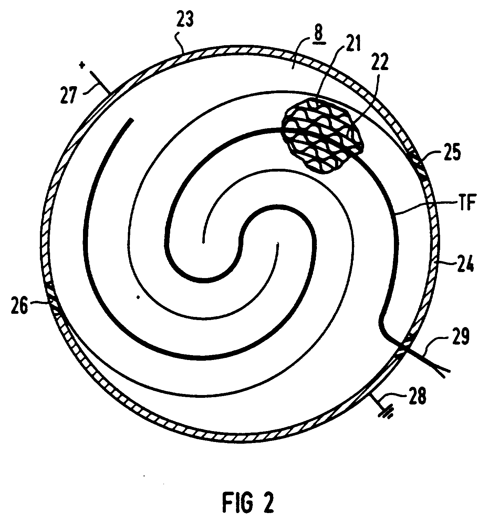

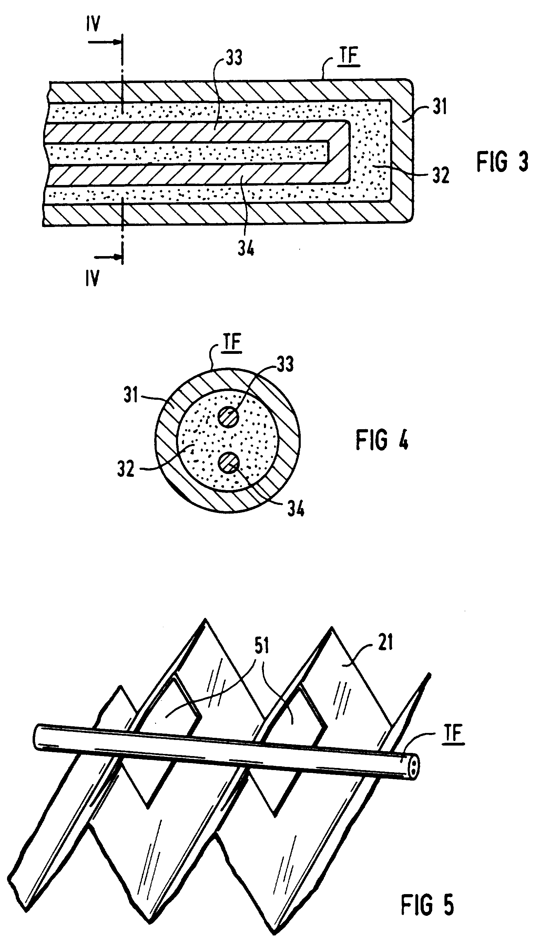

Für den Fall, daß Temperaturfühler erfindungsgemäß in einen Katalysator 8 integriert werden, veranschaulicht Fig. 2 ein mögliches Ausführungsbeispiel der Erfindung. Fig. 2 ist dabei ein teilweise schematisch dargestellter Schnitt durch den Katalysator 8 in der Ebene eines Temperaturfühlers TF. Bei Fig. 2 handelt es sich um eine an sich aus der WO 89/10470 bekannte Ausführungsform eines elektrisch beheizbaren metallischen Katalysatorträgers, der aus gegensinnig verschlungenen Blechlagen besteht und in seiner Querschnittsfläche durch Isolierschichten so unterteilt ist, daß ein für eine Beheizung geeigneter elektrischer Widerstand und Strompfad entsteht. Dieser Katalysator 8 ist aus abwechselnden Lagen gewellter 21 und glatter Bleche 22 aufgebaut und in seinem Inneren mit hier nur schematisch angedeuteten spiralförmig nach innen laufenden Isolierschichten versehen. Die Blechlagen sind von einem Mantel umgeben, der aus zwei Halbschalen 23, 24 besteht, welche durch Isolierabschnitte 25, 26 elektrisch voneinander getrennt sind. Die Mantelhalbschalen 23, 24 sind mit elektrischen Anschlüssen 27, 28 für eine elektrische Beheizung versehen. Im Inneren dieses Katalysators 8 verläuft nun parallel zu den einzelnen Blechlagen ein Temperaturfühler TF, der im vorliegenden Ausführungsbeispiel einen Draht enthält, dessen Widerstand sich mit der Temperatur ändert. Um nicht zwei Anschlüsse für den Temperaturfühler an verschiedenen Stellen vorsehen zu müssen, ist der Widerstandsdraht im Inneren U-förmig verlegt, d. h. er besteht aus am Ende verbundener Hin- und Rückleitung, wie dies in den Fig. 3 und 4 veranschaulicht wird. Der Temperaturfühler TF ist an einer Seite durch den Mantel 24 nach außen geführt und weist dort Anschlüsse 29 für die Meßleitungen auf. Das hier dargestellte Prinzip zur Verlegung eines Temperaturfühlers TF in einem Katalysator 8 ist nur ein Ausführungsbeispiel. Viele andere Möglichkeiten für anders aufgebaute Katalysatoren sind denkbar, insbesondere das spiralige Aufwickeln eines Temperaturfühlers.

Fig. 3 zeigt zur Veranschaulichung einen Längsschnitt durch das Ende des Temperaturfühlers TF, und in Fig. 4 ist ein Querschnitt entlang der Linie IV-IV in Fig. 3 dargestellt. Der Thermofühler hat einen Mantel 31, welcher beispielsweise aus Inconel oder einem anderen hochtemperaturfesten Stahl mit Chrom- und/oder Aluminium-Anteilen bestehen kann. Je nach den Anforderungen kann der Mantel 31 auch aus dem gleichen Material bestehen wie die Bleche des Katalysators 8. wodurch eine Verlötung zwischen Temperaturfühler TF und Blechen 21, 22 bzw. dem Mantel 24 problemlos möglich wird. Im Inneren des Temperaturfühlers TF ist ein Draht 33, 34 U-förmig verlegt, wobei der Draht beispielsweise aus Nickel oder einem anderen Material bestehen kann, welches einen stark von der Temperatur abhängigen Widerstand aufweist. Eine Isolierschicht 32, z. B. aus Magnesiumoxidpulver, verhindert in bekannter Weise Kontakte zwischen den beiden Leitungen 33, 34 des Widerstandsdrahtes untereinander und zu dem Mantel 31.

Fig. 5 zeigt zur Veranschaulichung einen kleinen Ausschnitt aus einem gewellten bzw im vorliegenden Fall gefalteten Blech, wie es zum Aufbau von Katalysator-Trägerkörpern verwendet wird. Durch Einschleifen einer geeigneten Nut quer zum Verlauf der Struktur in die Wellenberge kann eine Aufnahme für einen Temperaturfühler TF geschaffen werden, die es ermöglicht, den Temperaturfühler zusammen mit dem strukturierten Blech 21 zu einem Katalysator-Trägerkörper zu schichten bzw. zu wickeln oder zu verschlingen. Die Nut 51 sollte dabei nicht wie hier zur Veranschaulichung dargestellt wesentlich größer als der Querschnitt des Temperaturfühlers sein, sondern etwa dessen Abmessungen haben, so daß eine Einlötung oder zumindest eine Fixierung des Temperaturfühlers TF durch die Nut möglich ist. Sofern die Nut 51 so tief gemacht wird, daß der Temperaturfühler TF etwa auf halber Höhe der Wellung liegt, so mißt dieser hauptsächlich die Temperatur des vorbeiströmenden Gases und nicht in gleichem Maße die Temperatur der Struktur selbst. Durch eine geringere Tiefe der Nut 51 und möglicherweise eine Verlötung mit dem angrenzenden nächsten glatten Blech kann hingegen erreicht werden, daß der Temperaturfühler TF hauptsächlich die Temperatur der Trägerstruktur mißt. Eine flexible Bauweise je nach den Anforderungen ist daher möglich.

Die vorliegende Erfindung eignet sich besonders für fortschrittliche integrale Diagnose- und Überwachungssysteme bei Kraftfahrzeugen, die Verbrennungsmotoren mit elektronischer Einspritzung aufweisen und mit geregelten Katalysatoren ausgestattet sind. Besonders günstig ist die Erfindung anwendbar in Verbindung mit elektrisch beheizbaren Katalysatoren.

## Patentansprüche

1. Katalysator (8) mit Blechlagen, mit mindestens einem Temperaturfühler, wobei in den Katalysator (8) in mindestens einem Querschnittsbereich mindestens ein Temperaturfühler (TF; TF1; TF2) integriert ist, der sich in radialer Richtung sowohl über den Randbereich wie auch über den Zentralbereich eines Querschnittsbereichs erstreckt, dadurch gekennzeichnet, daß der Temperaturfühler als linienförmiger Temperaturfühler ausgebildet ist und parallel zu einer Blechlage des Katalysators läuft, vorzugsweise in diese Blechlage eingelegt oder integriert ist.

2. Katalysator nach Anspruch 1, dadurch gekennzeichnet, daß der Katalysator (8) zumindest in Teilbereichen elektrisch beheizbar ist und der mindestens eine Temperaturfühler (TF; TF1) in der Nähe des beheizbaren Teilbereiches angeordnet ist.

3. Katalysator nach Anspruch 1 oder 2, dadurch gekennzeichnet, daß der Katalysator (8) aus lagenweise angeordneten, zumindest teilweise strukturierten Blechen (21, 22) besteht, die gestapelt, gewickelt oder miteinander verschlungen sind, wobei der mindestens eine Temperaturfühler (TF; TF1, TF2) in eine der strukturierten Blechlagen (21) integriert ist, vorzugsweise in einen etwa quer zur Struktur verlaufenden Schlitz (51) eingelegt.

4. Katalysator nach einem der vorhergehenden Ansprüche, dadurch gekennzeichnet, daß der mindestens eine Temperaturfühler (TF) einen Draht (33, 34) mit von der Temperatur abhängigem Ohm'schen Widerstand enthält, der von einem metallischen Mantel (31) umgeben und von diesem durch eine Isolierschicht (32) elektrisch isoliert ist.

5. Katalysator nach Anspruch 4, dadurch gekennzeichnet, daß der Mantel (31) des Temperaturfühlers (TF) aus Inconel oder einem Chrom und/oder Aluminium enthaltenden hochtemperaturfesten Stahl besteht.

6. Katalysator nach einem der vorhergehenden Ansprüche, dadurch gekennzeichnet, daß mindestens zwei Temperaturfühler (TF1, TF2) in mindestens zwei Querschnittsbereichen vorhanden sind.

7. Katalysator nach einem der vorhergehenden Ansprüche, dadurch gekennzeichnet, daß mindestens ein Temperaturfühler (TF1, TF2) nahe einer Stirnfläche des Katalysators (8) angeordnet ist.

## Claims

1. A catalytic converter (8) with sheet layers having at least one temperature sensor, wherein at least one temperature sensor (TF; TF1; TF2) is integrated into the catalytic converter (8) in at least one cross-sectional region and extends in the radial direction both over the edge region and also over the central region of a cross-sectional region, characterised in that the temperature sensor is in the form of a linear temperature sensor and extends parallel to a sheet layer of the catalytic converter and is preferably fitted into or integrated into said sheet layer.

2. A catalytic converter according to claim 1 characterised in that the catalytic converter (8) is electrically heatable at least in portions thereof and the at least one temperature sensor (TF; TF1) is arranged in the vicinity of the heatable portion.

3. A catalytic converter according to claim 1 or claim 2 characterised in that the catalytic converter (8) comprises at least partially structured sheets (21, 22) which are arranged in a layer-wise manner and which are stacked, coiled or twisted together, wherein the at least one temperature sensor (TF; TF1; TF2) is integrated into one of the structured sheet layers (21) and is preferably fitted into a slot (51) extending approximately transversely to the structure.

4. A catalytic converter according to one of the preceding claims characterised in that the at least one temperature sensor (TF) includes a wire (33, 34) with an ohmic resistance which is dependent on temperature, which is surrounded by a metallic casing (31) and is electrically insulated therefrom by an insulating layer (32).

5. A catalytic converter according to claim 4 characterised in that the casing (31) of the temperature sensor (TF) comprises Inconel or a high-temperature-resistant steel containing chromium and/or aluminium.

6. A catalytic converter according to one of the preceding claims characterised in that there are at least two temperature sensors (TF1, TF2) in at least two cross-sectional regions.

7. A catalytic converter according to one of the preceding claims characterised in that at least one temperature sensor (TF1, TF2) is arranged near an end face of the catalytic converter (8).

## Revendications

1. Catalyseur (8) équipé de couches de tôles et comportant un capteur de température et dans lequel dans au moins une partie de la section transversale est intégré au moins un capteur de température (TF; TF1; TF2), qui s'étend dans une direction radiale aussi bien sur la zone marginale que sur la zone centrale d'une partie de la section transversale, caractérisé en ce que le capteur de température est agencé sous la forme d'un capteur de température de forme linéaire et est parallèle à une couche de tôle du catalyseur, et de préférence est inséré ou intégré dans cette couche de tôle.

2. Catalyseur selon la revendication 1, caractérisé en ce que le catalyseur (8) peut être chauffé électriquement au moins dans des zones partielles et qu'au moins un capteur de température (TF;TF1) est disposé à proximité de la zone partielle pouvant être chauffée.

3. Catalyseur selon la revendication 1 ou 2, caractérisé en ce que le catalyseur (8) est constitué par des tôles (21,22) disposées suivant des couches et au moins partiellement structurées et qui sont empilées, enroulées ou imbriquées les unes dans les autres, le au moins un capteur de température (TF;TF1;TF2) étant intégré dans l'une des couches structurées de tôle (21), et de préférence est inséré dans une fente (51) qui s'étend approximativement transversalement par rapport à la structure.

4. Catalyseur selon l'une des revendications précédentes, caractérisé en ce que le au moins un capteur de température (TF) contient un fil (33,34) possédant une résistance ohmique qui dépend de la température, et qui est entouré par une enveloppe métallique (31) et est isolé électriquement de cette dernière par une couche isolante (32).

5. Catalyseur selon la revendication 4, caractérisé en ce que l'enveloppe (31) du capteur de température (TF) est réalisée en inconel ou en un acier contenant du chrome et/ou de l'aluminium et très résistant aux hautes températures.

6. Catalyseur selon l'une des revendications précédentes, caractérisé en ce qu'au moins deux capteurs de température (TF,TF2) sont présents dans au moins deux parties de la section transversale.

7. Catalyseur selon l'une des revendications précédentes, caractérisé en ce qu'au moins un capteur de température (TF1,TF2) est disposé à proximité d'une surface frontale du catalyseur (8).
